# EUROPÄISCHE PATENTSCHRIFT

(11) **EP 3 702 981 B1**
(45) Veröffentlichungstag und Bekanntmachung des Hinweises auf die Patenterteilung: **01.04.2026**
(21) Anmeldenummer: 19159301.1
(22) Anmeldetag: 26.02.2019
(51) Int. Cl.: G06Q 10/06

(54) **RESSOURCENMANAGEMENT BEI PLANÄNDERUNG**
RESOURCE MANAGEMENT AT PLAN CHANGE
GESTION DES RESSOURCES AU CHANGEMENT DE PLAN

(43) Veröffentlichungstag der Anmeldung: 02.09.2020
(73) Patentinhaber: Siemens Aktiengesellschaft, 80333 München (DE)
(72) Erfinder: Fink, Rafael, 81829 München (DE); Gottschalk, Corinna, 81379 München (DE)
(74) Vertreter: Siemens Patent Attorneys

(56) Entgegenhaltungen:
- EP-A1- 3 258 429
- DE-A1- 102018 113 030
- US-A1- 2013 093 604
- US-A1- 2016 247 109
- US-A1- 2018 209 803

## Beschreibung

Die vorliegende Erfindung betrifft das Management von Ressourcen, insbesondere unter Verwendung eines heuristischen Ansatzes zur Optimierung eines Betriebs von physischen Ressourcen oder Einrichtungen. Es ist in einer Variante ein heuristisches Verfahren zur Optimierung des Betriebs eines Kfz-Fuhrparks vorgesehen. Das Management eines Fuhrparks ist etwa in US 2016/0247109 A1 beschrieben. US 2018/0209803 A1 diskutiert Ansätze zum Managen eines Mitfahrdienstes.

Ressourcenmanagementansätze etwa für Fuhrparks, in welchen beispielsweise Mietwagen nach Mietanfragen zu verteilen sind, sind etwa in B.B. Oliviera et al., "Fleet and revenue management in car rental companies: A literature review and an integrated conceptual framework", Omega 71(2017) oder A. Hertz, D.Schindl, N. Zufferey: "A solution method for a car fleet management problem with maintenance constraints", Journal of Heuristics 15(5) (2009) beschrieben. Diese Ansätze sind für große Fuhrparks wenig geeignet, und erfordern erhebliche Rechenleistung und -zeit. Ähnliche Probleme des Ressourcenmanagements können sich auch beim Betrieb von anderen Einrichtungen, wie etwa Kraftwerken oder Produktionseinrichtungen ergeben.

Es ist Aufgabe der vorliegenden Erfindung, ein effizientes Ressourcenmanagement für Ressourcen bereitzustellen, welches mit geringem rechnerischem Aufwand umzusetzen ist. Erfindungsgemäß sollen Ressourcen, die zu jeder Zeit nur zur Erfüllung einer Anforderung herangezogen werden können, möglichst effizient verteilt werden, etwa um möglichst hohe Produktion oder hohen Profit zu erzielen, oder Kosten niedrig zu halten. Dabei soll berücksichtigt werden können, dass die tatsächliche Benutzung einer Ressource anders verlaufen kann als geplant, etwa weil eine längere Benutzung erfolgt als ursprünglich angefragt. Um die Möglichkeit derartiger Abweichungen zu berücksichtigen, sieht das beschriebene Ressourcenmanagement Pufferzeiträume vor. Die Erfindung betrifft Verfahren und Einrichtungen gemäß den unabhängigen Ansprüchen.

Insbesondere ist erfindungsgemäß ein Verfahren zum Ressourcenmanagement vorgesehen. Das Verfahren umfasst das Bereitstellen einer Repräsentation eines Satzes von Ressourcen sowie das Erhalten eines Satzes von Verwendungsanfragen. Eine Verwendungsanfrage ist, und/oder die Verwendungsanfragen sind jeweils, durch Zuteilen einer Ressource zu der Verwendungsanfrage erfüllbar. Die Ressourcen sind derart in Ressourcenklassen eingeteilt, dass Ressourcen einer Ressourcenklasse bezüglich der Erfüllung einer Verwendungsanfrage austauschbar sind. Eine Verwendungsanfrage ist, und/oder die Verwendungsanfragen sind jeweils, insbesondere durch Zuordnung einer Ressource einer durch die Verwendungsanfrage angefragten Ressourcenklasse für einen bestimmten, durch die Verwendungsanfrage angefragten Verwendungszeitraum erfüllbar. Dabei umfasst ein Verwendungszeitraum einen Aktivitätszeitraum und einen Pufferzeitraum, wobei der Pufferzeitraum an den Aktivitätszeitraum anschließt. Der Aktivitätszeitraum kann einen angefragten Zeitraum zur Verwendung einer Ressource repräsentieren, und der Pufferzeitraum kann einen zusätzlichen Zeitpuffer repräsentieren. Es wird eine Zielverteilung von Ressourcen zu Verwendungsanfragen basierend auf einer Optimierungsparametrisierung bestimmt, wobei die Optimierungsparametrisierung auf Gewichtungen von Zuordnungen von Ressourcen zu Verwendungsanfragen basiert. Ferner wird zum Bestimmen der Zielverteilung eine Startlösung erstellt, welche eine Verteilung von Ressourcen zu Verwendungsanfragen repräsentiert, wobei für jede Verwendungsanfrage eine Zuordnung zu genau einer Ressource besteht. Die Zielverteilung wird ausgehend von der Startlösung durch Verschieben einer oder mehrerer Zuordnungen von oder zu mindestens einer Ressource in einer oder mehreren Verschiebungsschritten basierend auf einer Optimierung bezüglich der Optimierungsparametrisierung bestimmt. Es hat sich gezeigt, dass bereits mit wenigen Verschiebungsschritten schnell eine Optimierung der Zielverschiebung möglich wird, wobei nur eine geringe Rechenleistung erforderlich ist. Darüber hinaus lässt sich etwa durch Vorgabe der Rekursionstiefe der Verschiebungsschritte der Rechenaufwand leicht einstellen. Das Verfahren kann auf einer Bearbeitungseinrichtung ausgeführt werden, insbesondere auf einem System mit beschränkter Rechenleistung, etwa ein Laptop, und kann schnell und effizient eine Zielverteilung bestimmen. Durch Verwendung der Pufferzeiträume können ungünstige Verteilungen vermieden werden und insbesondere Abweichungen von tatsächlicher Verwendung zu angefragter Verwendung aufgefangen werden.

Es kann vorgesehen sein, dass für die Optimierung zeitliche Überlappung eines Pufferzeitraums mit einem Aktivitätszeitraum, oder mit einem anderen Pufferzeitraum, anders gewichtet ist als zeitliche Überlappung eines Aktivitätszeitraums mit einem Aktivitätszeitraum, zum Beispiel für eine Ressource. Insbesondere kann die Überlappung eines Aktivitätszeitraums mit einem Aktivitätszeitraum derart gewichtet sein, dass bei der Optimierung derartige Überlappungen eher vermieden werden als andere Überlappungen, etwa durch eine entsprechend hohe Gewichtung. Damit können Aktivitätszeiträume, in welchen Ressourcen mit höherer Wahrscheinlichkeit verwendet werden, anderes priorisiert werden als Pufferzeiträume. In einigen Fällen können Pufferzeiträume jedoch höher priorisiert sein, etwa abhängig vom Anfrager oder Benutzer, so dass etwa besonders wichtige Kunden priorisiert sein können. Die Gewichtung eines Zeitraums kann allgemein die Gewichtung einer Zuordnung unter Berücksichtigung des Zeitraums betreffen.

Für unterschiedliche Ressourcen, und/oder Ressourcenklassen, können Pufferzeiträume unterschiedlich gewichtet sein. Somit lassen sich Ressourcen und Zeiträume flexibel behandeln.

Es kann vorgesehen sein, dass für unterschiedliche Verwendungsanfragen Pufferzeiträume unterschiedlich gewichtet sind. Dabei können insbesondere Anfrager und/oder Ressourcenklasse und/oder Länge und/oder Lage des angefragten Aktivitätszeitraumes berücksichtigt sein.

Die Länge eines Pufferzeitraums kann bei einigen Varianten auf historischen Informationen und/oder der Ressourcenklasse und/oder einem Anfrager basieren. Historische Informationen können insbesondere eine typische, etwa durchschnittliche, Verwendungsdauer der Ressource oder Ressourcenklasse repräsentieren, und/oder Anfrager-spezifisch sein, etwa bisheriges Verhalten eines Anfragers repräsentieren. Somit kann eine flexiblere zeitliche Optimierung erfolgen. Allgemein können historische Informationen aus einem geeigneten Speicher abgerufen werden oder abrufbar sein, etwa einer Datenbank oder Dauerspeicher.

Eine Gewichtung einer Zuordnung einer Ressource zu einer Verwendungsanfrage kann beispielsweise auf Einnahmen und/oder Kosten und/oder Profit und/oder Länge des Verwendungszeitraums und/oder Länge des Aktivitätszeitraums und/oder Länge des Pufferzeitraums und/oder Lage des Verwendungszeitraums und/oder Klassengröße der Ressourcenklasse der Ressource und/oder Priorisierungsinformationen basieren. Allgemein kann eine Gewichtung auf einem oder mehreren Gewichtungsparametern basieren, und/oder eine oder mehrere Zuordnungen von Verwendungsanfragen an eine Ressource betreffen. Die Klassengröße kann die Anzahl der Ressource in einer Ressourcenklasse parametrisieren, zum Beispiel explizit oder implizit, etwa relative zu der Größe eine Vergleichsklasse. Eine Gewichtung kann beispielsweise auf dem Verhältnis von Klassengröße zu Verwendungszeitraum basieren. Eine Gewichtung kann als Funktion von Teilgewichten darstellbar sein, sich etwa als Summe und/oder Produkt von Teilgewichten ergeben. Jeder Zuordnung kann eine Gewichtung assoziiert sein. Allgemein kann eine Gewichtung auf der Ressource und/oder Ressourcenklasse und/oder der Verwendungsanfrage und/oder externen Parametern basieren. Eine Gewichtung kann allgemein ein Gewicht zum Vergleich mit anderen Gewichten repräsentieren, etwa als absoluter Wert oder als relativer Wert, etwa zu einem Vergleichsgewicht. Eine Optimierungsparametrisierung kann eine Summe von Gewichten repräsentieren, welche zur Optimierung etwa maximiert und/oder vergrößert, oder minimiert und/oder verkleinert werden soll, insbesondere unter Berücksichtigung von Pufferzeiträumen. Es kann vorgesehen sein, dass unterschiedliche Zuordnungen auf unterschiedlichen Parametern beruhen. Etwa können für bestimmte Fahrzeugklassen kundenbezogene Parameter herangezogen werden, welche für andere Fahrzeugklassen nicht vorliegen. In anderen Fällen können, etwa für einen Aktivitätszeitraum, Anlaufzeiten oder Übergabezeiten berücksichtigt werden, welche für bestimmte Anlagenarten vorliegen, aber für andere nicht, etwa im Vergleich zwischen Schmelzöfen verschiedenen Art und/oder Größe. Es kann allgemein vorgesehen sein, dass eine Gewichtung auf einer zeitlichen Überlappung von der Ressource zugeordneten Verwendungsanfragen basiert, etwa hinsichtlich Aktivitätszeiträumen und/oder Pufferzeiträumen. Allgemein kann eine zeitliche Überlappung vorliegen, wenn Zeiträume, etwa zwei oder mehrerer einer Ressource zugeordneter Verwendungsanfragen zeitlich zumindest teilweise überlappen. Dabei können Übertragungszeiträume berücksichtigt sein, etwa die Zeit, die zur Übergabe eines Kfz oder zum Um-Konfigurieren einer Anlage notwendig ist, beispielsweise indem die Verwendungszeiträume, insbesondere Aktivitätszeiträume, entsprechend angepasst werden, etwa verlängert werden, und/oder eine Überlappung entsprechend bestimmt wird. Ein Bezug auf eine Überlappung von Verwendungsanfragen kann als Bezug auf die zeitliche Überlappung von angefragten Verwendungszeiträumen der Anfragen verstanden werden, insbesondere bezogen auf die gleiche Ressource, wenn diese zugeteilt ist. Durch die Gewichtung lässt sich eine Vielzahl von Bedingungen für die Verteilung von Ressourcen berücksichtigen.

Es kann vorgesehen sein, dass eine Verwendungsanfrage durch Zuordnung einer Ressource mindestens einer anderen Ressourcenklasse erfüllbar ist. Etwa kann vorgesehen sein, dass die andere Ressourcenklasse höherwertige Ressourcen enthält oder repräsentiert, beispielsweise leistungsfähigere oder teurere Maschinerie oder Fahrzeuge.

Die Ressourcen können insbesondere physische Ressourcen sein. Es ist vorgesehen, dass gemäß der Zielverteilung physisch jede Ressource zu jedem Zeitpunkt nur einer Verwendungsanfrage zugeordnet ist. In anderen Ressourcenverteilungen, etwa einer Startverteilung oder Zwischenverteilung, können für eine oder mehrere Ressourcen jeweils zeitliche Überlappungen der Verwendungszeiträume, welche der Ressource zugeordnet sind, auftreten.

Es kann vorgesehen sein, dass die Ressourcen Betriebseinrichtungen sind, insbesondere Fahrzeuge, Maschinen oder Produktionsanlagen. Ressourcen des Satzes von Ressourcen können vergleichbaren Typs sein und/oder vergleichbare Funktionalität aufweisen, etwa als Fahrzeuge wie Kfz, oder Motorräder, oder Produktionslinien zur Herstellung ähnlicher oder gleichartiger Produkte. Es ist vorstellbar, dass Wartungszeiten durch entsprechende Verwendungsanfragen repräsentiert werden, etwa durch entsprechende Aktivitätszeiträume. Alternativ oder zusätzlich kann vorgesehen sein, dass eine Gewichtung auf Wartungszeiten basiert.

Das Verfahren umfasst das Betreiben der Ressourcen gemäß der Zielverteilung. Das Betreiben der Ressourcen kann das Übergeben und/oder Bereitstellen der Ressourcen gemäß der Zielverteilung entsprechend der Verwendungsanfragen umfassen, etwa durch entsprechende Anweisungen und/oder Übergabe. In manchen Fällen kann das Betreiben das Ansteuern von Ressourcen und/oder Bereitstellen von Betriebsmitteln wie Brennstoff und/oder Ausgangsmaterial für Produkte und/oder Energie umfassen, etwa durch entsprechende Bestellung und/oder Ansteuerung. In diesem Zusammenhang sind die Betriebsmittel für den Verbrauch durch die Ressourcen vorgesehen, welche Geräte und Anlagen repräsentieren können.

Für das Bestimmen einer Zielverteilung können basierend auf der Startlösung für eine Anzahl von Iterationen I, wobei I mindestens 1 ist, für jede der Ressourcen Verschiebungsschritte durchgeführt werden, bis eine Optimierung basierend auf der Optimierungsparametrisierung auftritt, oder keine Optimierung gefunden wurde. Dabei kann nach sukzessivem Durchlaufen aller Ressourcen in einer Iteration eine Ressourcenverteilung bestimmt werden. Wird die Iteration beendet, kann diese Ressourcenverteilung als Zielverteilung dienen, wird fortgefahren, kann in einer neuen Iteration ausgehend von Ressourcenverteilung eine weitere Optimierung erfolgen, wobei diese Ressourcenverteilung als Zwischenverteilung oder angepasste Startlösung angesehen werden kann. I kann vorgegeben oder dynamisch angepasst sein, etwa basierend auf einer erreichten Optimierung, welche beispielsweise durch Vergleich der Optimierungsparametrisierung für eine Ressourcenverteilung mit einem Zielwert bestimmt sein kann, etwa einem minimalen oder maximalen Wert. Entsprechend kann durch Wahl von I eine Balance zwischen Rechenaufwand und Optimierung gefunden werden. Verschiebungsschritte können dadurch durchgeführt werden, dass jeweils für einen oder mehrere Verschiebungsschritte überprüft wird, ob eine Optimierung vorliegt. Liegt für einen Schritt oder eine Kette von Schritten eine Optimierung vor, kann die betrachtete Verteilung entsprechend geändert werden, so dass für nachfolgend betrachtete Ressourcen die geänderte Verteilung berücksichtigt wird.

In manchen Fällen kann das Bestimmen der Zielverteilung umfassen, basierend auf der Optimierungsparametrisierung für Ressourcen mit zugeteilten Verwendungsanfragen mit zeitlich überlappenden Verwendungszeiträumen, Ressourcen aus einem zweiten Satz von Ressourcen Verwendungsanfragen zuzuteilen, welche nicht im Satz von Ressourcen enthalten sind. Derartige Ressourcen können externe Ressourcen sein, welche etwa von externen Anbietern erworben werden können. Üblicherweise ist der Erwerb solcher Ressourcen mit Ineffizienz oder Kosten oder Profitverlust verbunden, etwa weil Verwendungsanfragen an externe Anbieter vergeben werden oder Produkte zugekauft werden. Die Optimierungsparametrisierung kann dazu ausgelegt sein, die Zuteilung von Ressourcen aus dem zweiten Satz zu minimieren, beziehungsweise damit verbundene Kosten oder Ineffizienzen. Insbesondere kann die Optimierungsparametrisierung eine Summe gewichteter zeitlicher Überlappungen repräsentieren.

Es kann vorgesehen sein, dass die Zielverteilung derart bestimmt wird, dass die Summe aller gewichteten, zeitlichen Überlappungen der Verwendungszeiträume der Verwendungsanfragen, welche derselben Ressource zugeordnet sind, minimiert sind, insbesondere derart, dass Aktivitätszeiträume nicht mit anderen Aktivitätszeiträumen zeitlich überlappen. Die Zielverteilung derart bestimmt, dass keine zeitlichen Überlappungen der Verwendungszeiträume der Verwendungsanfragen bestehen, welche einer Ressource zugeordnet sind, insbesondere hinsichtlich der Aktivitätszeiträume. Somit wird die Zielverteilung durch die physischen Ressourcen implementiert. Es kann vorgesehen sein, dass von der Zielverteilung alle Anfragen erfüllt werden, etwa durch Ressourcen aus dem Satz der Ressource, und/oder durch Ressourcen aus dem zweiten Satz. In einigen Varianten kann vorgesehen sein, dass Gewichtungen derart gewählt sind, dass eine (Ziel-)Verteilung priorisiert ist, in welcher für eine Ressource jeweils zwischen dem Ende eines Aktivitätszeitraums A(N) und dem Anfang des nächsten Aktivitätszeitraums A(N+1) mindestens ein dem Zeitraum A(N) zugeordneter, sich zeitlich nicht mit dem nächsten Aktivitätszeitraums A(N+1) überlappender Pufferzeitraum liegt, etwa vollständig, oder zumindest teilweise. Ein Pufferzeitraum kann allgemein einem Aktivitätszeitraum zugeordnet sein, wenn beide dem gleichen Verwendungszeitraum zugeordnet sind.

Es ist eine Bearbeitungseinrichtung vorgesehen, welche dazu ausgebildet ist, ein hierin beschriebenes Verfahren auszuführen. Insbesondere ist eine Bearbeitungseinrichtung mit einer integrierten Schaltung beschrieben, welche dazu ausgebildet ist, eine Repräsentation eines Satzes von Ressourcen bereitzustellen, sowie einen Satz von Verwendungsanfragen zu erhalten, wobei eine Verwendungsanfrage durch Zuteilen einer Ressource zu der Verwendungsanfrage erfüllbar ist. Die Ressourcen sind in Ressourcenklassen eingeteilt, so dass Ressourcen einer Ressourcenklasse bezüglich der Erfüllung einer Verwendungsanfrage austauschbar sind. Dabei ist eine Verwendungsanfrage durch Zuordnung einer Ressource einer durch die Verwendungsanfrage angefragten Ressourcenklasse für einen bestimmten, durch die Verwendungsanfrage angefragten Verwendungszeitraum erfüllbar, wobei ein Verwendungszeitraum einen Aktivitätszeitraum und einen Pufferzeitraum umfasst. Der Pufferzeitraum schließt an den Aktivitätszeitraum an. Der Aktivitätszeitraum repräsentiert einen angefragten Zeitraum zur Verwendung einer Ressource, und der Pufferzeitraum repräsentiert einen zusätzlichen Zeitpuffer.

Die Bearbeitungseinrichtung ist ferner dazu ausgebildet, eine Zielverteilung von Ressourcen zu Verwendungsanfragen basierend auf einer Optimierungsparametrisierung zu bestimmen, wobei die Optimierungsparametrisierung auf Gewichtungen von Zuordnungen von Ressourcen zu Verwendungsanfragen basiert. Die Zielverteilung wird derart bestimmt, dass keine zeitlichen Überlappungen der Verwendungszeiträume hinsichtlich der Aktivitätszeiträume der Verwendungsanfragen bestehen, welche einer Ressource zugeordnet sind. Zum Bestimmen der Zielverteilung wird eine Startlösung erstellt, welche eine Verteilung von Ressourcen zu Verwendungsanfragen repräsentiert, wobei für jede Verwendungsanfrage eine Zuordnung zu genau einer Ressource besteht. Die Zielverteilung wird ausgehend von der Startlösung durch Verschieben einer oder mehrerer Zuordnungen von oder zu mindestens einer Ressource in einer oder mehreren Verschiebungsschritten basierend auf einer Optimierung bezüglich der Optimierungsparametrisierung bestimmt. Für die Optimierung kann die zeitliche Überlappung eines Pufferzeitraums mit einem Aktivitätszeitraum anders gewichtet sein als zeitliche Überlappung eines Aktivitätszeitraums mit einem Aktivitätszeitraum. Für unterschiedliche Ressourcen können Pufferzeiträume unterschiedlich gewichtet sein.

Die Bearbeitungseinrichtung kann allgemein Bearbeitungslogik, und/oder Bearbeitungsschaltungen, und/oder Speicher aufweisen, welche betreibbar sind, um das Verfahren auszuführen. Es kann vorgesehen sein, dass die Bearbeitungseinrichtung ein einzelnes System oder ein verteiltes System repräsentiert, etwa einen oder mehrere Computer, und/oder als Cloud-System implementiert ist. Eine Bearbeitungslogik kann eine integrierte Schaltung und/oder eine oder mehrere Prozessoren und/oder Kontroller und/oder ASICs (Application Specific Integrated Circuitry, Anwendungsspezifische integrierte Schaltung) oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM (Random Access Memory) und/oder optischen Speicher und/oder magnetischen Speicher und/oder Flash und/oder NAND (Not AND) Speicher, usw. Es kann allgemein ein Speichermedium vorgesehen sein, welches Instruktionen speichert, die dazu geeignet sind, eine Bearbeitungseinrichtung dazu zu bringen, das hierin beschrieben Verfahren auszuführen. Das Speichermedium kann insbesondere ein nichtflüchtiges und/oder nicht-transitorisches Medium sein. Es ist ein Computerprogramm beschrieben, welches derartige Instruktionen aufweist. Das Computerprogramm kann Module aufweisen, um die Aktionen und/oder Schritte des Verfahrens auszuführen, insbesondere ein Repräsentationsmodul, und/oder ein Anfragemodul, und/oder ein Verteilungsmodul, welches insbesondere ein oder mehrere Untermodule aufweisen kann, etwa ein Verschiebungsmodul und/oder ein Optimierungsmodul.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 einen erfindungsgemäßen Ansatz für Ressourcenmanagement darstellt;
Fig. 2 Ressourcenanfragen darstellt;
Fig. 3 erfindungsgemäße Verschiebungen von Zuordnungen illustriert; und
Fig. 4 einen erfindungsgemäßen Ansatz mit Pufferzeiträumen illustriert.

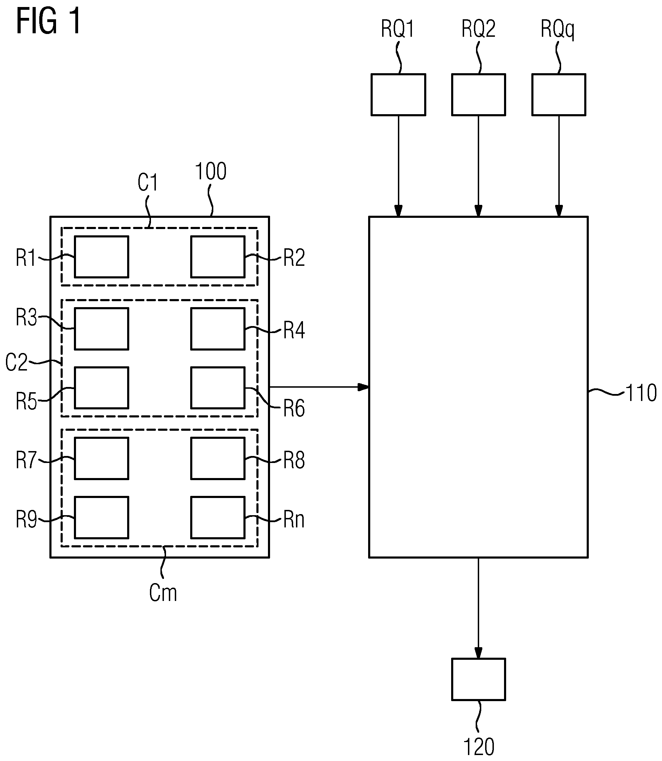

Fig. 1 zeigt einen beispielhaften Ansatz für Ressourcenmanagement. Die zu handhabenden Ressourcen R1,...,Rn sind in einem Satz 100 von Ressourcen repräsentiert, etwa in einer Datenbank oder Tabelle oder einer anderen Repräsentation bereitgestellt. Die Repräsentation kann bereitgestellt sein, indem sie in einem Speicher und/oder über den Empfang entsprechender Eingabe und/oder Auslesen von Informationen bereitgestellt ist. Die Ressourcen R1,...,Rn können insbesondere Fahrzeuge eines Fuhrparks sein, oder Mietwagen, die an einem Standort bereitstehen. Es kann vorgesehen sein, dass Ressourcen allgemein zum Ende einer Verwendung wieder am selben Ort zur Verfügung stehen, etwa weil Fahrzeuge oder Werkzeuge oder mobile Einrichtungen zurückgebracht werden, oder die Ressourcen selbst stationär sind, beispielsweise Industrieanlagen wie Produktionsanlagen oder Fertigungsanlagen. Die Ressourcen sind in Ressourcenklassen C1,**...**,Cm eingeteilt. Jede Ressourcenklasse kann ein oder mehrere Ressourcen umfassen. Unterschiedliche Ressourcenklassen können unterschiedliche Größen aufweisen, etwa unterschiedliche Anzahlen von Ressourcen in der Klasse. Es kann angenommen werden, dass jede Ressourcenrepräsentation ein entsprechendes physisches Äquivalent aufweist.

Es sind Verwendungsanfragen RQ1,...,RQq zu erfüllen, indem entsprechend Ressourcen bereitgestellt werden. Eine Verwendungsanfrage RQ1,...,RQq kann insbesondere angeben, welche Ressourcenklasse wann und/oder für welchen Verwendungszeitraum angefragt wird. Ein Verwendungszeitraum kann dabei ein ununterbrochenes Intervall repräsentieren. Je nach Ressourcenart kann das Intervall beliebig lang sein und/oder in beliebiger Auflösung angegeben sein, etwa Stunde, Minuten, Tage, etc. Ziel des Ressourcenmanagements ist es, alle Anfragen möglichst effizient zu erfüllen, etwa mit maximiertem Profit. Es können zusätzliche Prioritätsinformationen vorliegen, welche etwa Priorität bestimmter Verwendungsanfrage oder zugehöriger Projekte oder Kunden angeben können, und/oder ob eine einzuhaltende Wartungsfrist vorliegt, und/oder ob andere Prioritäten zu berücksichtigen sind, etwa basierend auf externen Parametern oder Bedingungen, welche beispielsweise nicht speziell mit einer Ressource und/oder Anfrage zusammenhängen. Die Verwendungsanfragen RQ1,...,RQq können als ein Satz von Verwendungsanfragen repräsentiert sein. Eine Verwendungsanfrage kann erfüllt werden, indem eine Ressource einer angefragten Ressourcenklasse, und/oder eine angefragte Ressource, für den angefragten Verwendungszeitraum bereitgestellt und/oder entsprechend der Anfrage betrieben werden. In einigen Fällen kann eine Ressource einer Ressourcenklasse durch eine Ressource aus einer anderen Ressourcenklasse ersetzbar sein, etwa durch eine höherwertige Ressource, etwa ein leistungsfähigeres oder luxuriöseres Fahrzeug. Es kann vorgesehen sein, dass ein Abbildung zulässiger Ersetzung zwischen Ressourcenklassen und/oder Ressourcen vorliegt, basierend auf welcher eine Ressourcenverteilung durchgeführt werden kann. Alternativ oder zusätzlich kann vorgesehen sein, dass zwischen bestimmten Ressourcenklassen keine Ersetzung erfolgen kann, etwa von einer höherwertigen Klasse zu einer niederwertigen Klasse. Beispielsweise kann vorgesehen sein, dass eine angefragte Limousine nicht durch einen Kleinwagen ersetzt werden kann, ein Kleinwagen aber durch einen Mittelklassewagen oder eine Limousine. Andere Beispiele bezogen auf Industrieanlagen sind vorstellbar. Die Verwendungsanfragen können über Eingabe, Auslesen aus einem Speicher und/oder Empfangen über Kommunikationsmittel erhalten oder erhaltbar sein. Ein Computerprogramm, welches die Erfindung implementiert, kann entsprechende Module aufweisen.

Ein Optimierer 110, welcher in einer Bearbeitungseinrichtung implementiert sein kann, vermag es, auf den Satz 100 von Ressourcen R1,...,Rn und die Verwendungsanfragen RQ1,**...,** RQq zuzugreifen, und darauf basierend eine Zielverteilung 120 zu bestimmen.

Zum Bestimmen einer Zielverteilung 120 kann eine Startlösung bestimmt werden, welche als Ausgangsverteilung angesehen werden kann. Die Startlösung kann allgemein Verwendungsanfragen zu Ressourcen zuteilen, welche jeweils die Verwendungsanfrage zu erfüllen vermag. Dabei können Überlappungen auftreten. Eine Startlösung kann beispielsweise erstellt werden, indem sukzessive oder nacheinander in geeigneter oder zufälliger Reihenfolge Ressourcen Verwendungsanfragen zugeordnet werden. Insbesondere kann vorgesehen sein, dass basierend auf Gewichtungen sukzessive für jede einzelne Ressource aus dem Satz von Ressourcen jeweils noch nicht zugewiesene Verwendungsanfragen der Ressource derart zugewiesen werden, dass sich eine Optimierung ergibt, ohne dass Überlappungen auftreten, und dass die Anfrage erfüllt ist. Für nachfolgende Ressourcen wird aus den noch verbleibenden Anfragen analog Verfahren. Sind nach Zuteilen aller Ressourcen noch Verwendungsanfragen übrig, können diese überlappend zugeordnet werden, etwa basierend auf Gewichtung der Überlappung, beispielsweise um diese zu minimieren. Alternativ kann eine Startlösung auf andere Art bestimmt werden, etwa durch zufällige Verteilung und/oder unter Berücksichtigung gespeicherter Vergleichslösungen.

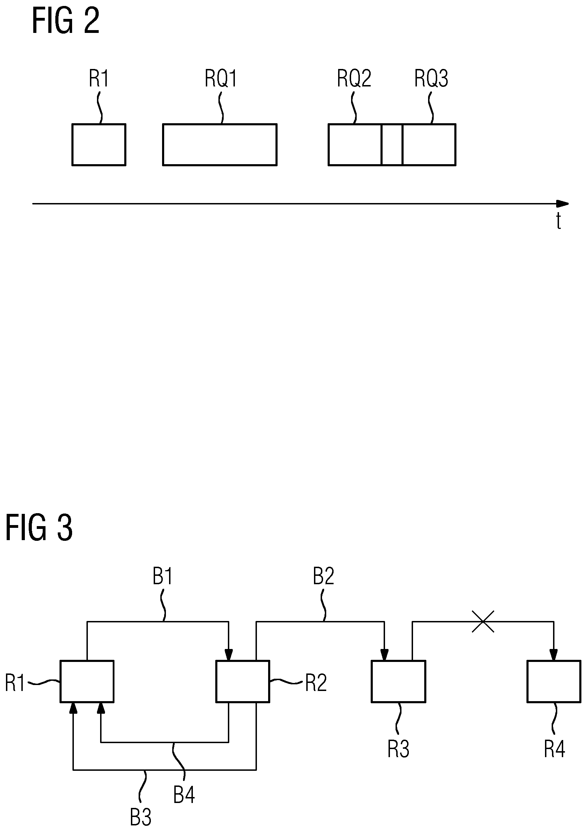

Allgemein kann eine Optimierungsparametrisierung alle Parameter und/oder Werte und/oder Bedingungen umfassen, welche zur Optimierung verwendet werden, insbesondere Gewichtungen. Eine Optimierungsparametrisierung kann zum Vergleich oder zur Optimierung bezüglich einer Ressource und zugeordneter Verwendungsanfragen verwendet werden, etwa durch Vergleich mit einem Zielwert oder Schwellwert oder Optimierungswert. So kann beispielsweise für eine Startlösung für einzelne Ressourcen eine Optimierung vorgenommen werden, etwa maximaler Profit bei Mietwagenverleih. Es kann vorgesehen sein, dass die Optimierungsparametrisierung alternativ oder zusätzlich die Bestimmung einer Optimierung bezüglich einer Verteilung insgesamt betrifft, etwa um eine Zielverteilung zu optimieren und/oder zur Bestimmung von Zwischenverteilungen und/oder Verschiebungsschritten. Für die Zielverteilung sollte die Gesamtsumme aller gewichteten Überlappungen zwischen allen derselben Ressource zugeordneten Aktivitäts- und Pufferzeiträumen bei der Ressourcenzuordnung minimiert werden. Eine geeignete Gewichtung von Überlappungen von Aktivitätszeiträumen mit anderen Aktivitätszeiträumen, beziehungsweise von Aktivitätszeiträumen mit Pufferzeiträumen oder von Pufferzeiträumen mit Pufferzeiträumen, ist hierfür bei der Optimierung zu berücksichtigen. In einigen Varianten können bereits Überlappungen von Pufferzeiträumen für eine Lösung ausgeschlossen werden, etwa aufgrund einer ausreichenden Ressourcenverfügbarkeit. Es sind auch Varianten vorstellbar, in welchen Überlappungen von Pufferzeiträumen weniger stark ausgeschlossen oder vermieden werden als Überlappungen von Aktivitätszeiträumen mit Pufferzeiträumen, welche weniger stark ausgeschlossen oder vermieden werden als Überlappungen von Aktivitätszeiträumen mit Aktivitätszeiträumen. Durch individualisierte Gewichtung für Verwendungsanfragen, etwa basierend auf zeitlicher Lage und/oder Länge von Aktivitätszeitraum oder Verwendungszeitraum und/oder Priorität der Anfrage und/oder des Anfragers und/oder der Ressource und/oder Ressourcenklasse können vielfältige Gewichtungen erreicht werden, und etwa für einige Anfragen und/oder Ressourcen Überlappungen von Aktivitätszeiträumen mit Pufferzeiträumen stärker vermieden werden als Überlappungen von Aktivitätszeiträumen mit Aktivitätszeiträumen für andere Anfragen. Fig. 2 zeigt schematisch Ressourcenanfragen RQ, welche einer Ressource R1 zugeordnet sein können. In einer gezeigten, nicht vorteilhaften Verteilung können die Verwendungszeiträume zweier Ressourcenanfragen überlappen. Dann kann eine Anfrage gegebenenfalls nicht erfüllt sein.

Fig. 3 zeigt beispielhaft erfindungsgemäße Verschiebungen, welche im Rahmen einer lokalen Suche oder Suchheuristik implementiert sein können. Basierend auf einer Startlösung oder Zwischenverteilung kann für jede Ressource nach möglichen Verschiebungen zugeteilter Anfragen zu oder von der Ressource gesucht werden, welche die Anfragen noch erfüllen. Die möglichen Verschiebungen können daraufhin überprüft werden, ob sie zu einer Optimierung oder Verbesserung der Verteilung führen, etwa basierend auf der Optimierungsparametrisierung. Insbesondere kann hinsichtlich einer Summe gewichteter Überlappungen optimiert werden. Jede mögliche einzelne Verschiebung kann potentiell weitere Verschiebungen ermöglichen, so dass sich ein Verschiebungsbaum ergeben kann, welcher von der Anzahl t betrachteter Schritte abhängt. t kann festgelegt oder variabel sein, etwa zwischen Iteration I geändert werden, oder innerhalb einer Iteration. Beispielsweise kann t mit zunehmender Anzahl von Ressourcen steigen, für welche Verschiebungen innerhalb einer Iteration erfolgt sind. t kann als Tiefe des Suchraums oder Rekursionstiefe oder Anzahl zulässiger Verschiebungen angesehen werden. In Fig. 3 sind beispielhaft mögliche Verschiebungen B1-B4 von einer Ressource R1 dargestellt. Abhängig von der Tiefe t können Verschiebungen mit verketten Verschiebungsschritten vorgesehen sein, etwa t+1 Schritten. Jeder Schritt entspricht einer Verschiebung einer Zuordnung einer Anfrage an eine andere Ressource, welche die Anfrage zu erfüllen vermag. Das Ziel (neue Ressource) eines Verschiebungsschritts kann der Ausgang eines nächsten Schrittes sein. In einigen Varianten kann jede Ressource maximal einmal Ziel und/oder einmal Ausgang eines Verschiebungsschrittes sein. Dabei kann vorgesehen sein, dass jede Anfrage höchstens einmal neu zugeordnet oder verschoben wird. Ketten aus Verschiebungsschritten mit t+1 Schritten können betrachtet werden, so dass die Ausgangsressource des ersten Schrittes mit der Zielressource des letzten Schrittes identisch sein kann, und der Ressource entspricht, für welche die Optimierung durchgeführt wird. In Fig. 3 sind ausgehend von der Ressource R1 für t=2 beispielsweise Verschiebungen oder Ketten von (B1), (B1, B2), (B1, B4), (B1, B2, B3) möglich. Dabei kann jeweils eine Zuordnung einer Anfrage pro Verschiebungsschritt verschoben sein. Es kann vorgesehen sein, die möglichen Verschiebungen oder Ketten sukzessive, etwa mit steigender Länge, zu prüfen, ob eine Optimierung vorliegt. Ist dies der Fall, kann für diese Ressource abgebrochen werden, und mit einer anderen Ressource fortgefahren werden, wobei die optimierte Zuordnung als Zwischenergebnis beibehalten werden kann, so dass nachfolgende Operationen mit geänderter Verteilung erfolgen. Liegt keine Optimierung vor, kann ausgehend von derselben Ressource eine andere Kette derselben Länge überprüft werden, falls vorhanden, oder eine längere Kette überprüft werden. Wird keine Optimierung in allen möglichen Ketten gefunden, und/oder läuft eine Bearbeitungsbedingung ab, etwa eine maximale Rechenzeit, kann zur nächsten Ressource übergegangen werden. Sind alle möglichen Ressourcen überprüft, kann eine Iteration beendet werden. Statt auf Vorliegen einer Optimierung kann auf erreichen einer Zieloptimierung geprüft werden, welche für alle Ketten und/oder Kettenlängen und/oder Ressourcen gleich sein kann, oder welche zwischen Ketten und/oder Kettenlängen und/oder Ressourcen veränderlich sein kann. Eine Optimierung kann insbesondere eine gewichtete Summe von Überlappungen für alle Ressourcen der Verteilung betreffen, welche gerade sukzessive optimiert wird.

Nach Durchlaufen aller Ressourcen und/oder Beenden der Iteration, können Verwendungsanfragen anderen Ressourcen zulässiger Ressourcenklassen zugeordnet werden, etwa durch Upgrade in eine höherwertige Klasse, oder externen Ressourcen zugeteilt werden, etwa anderen Dienstanbietern. Dies kann basierend auf der Optimierungsparametrisierung erfolgen, so dass hinsichtlich der Optimierung die beste Verteilung zwischen externen Ressourcen und Ressourcen des Satzes 100 ermöglicht wird. Somit kann eine Zielverteilung 120 bestimmt werden.

Es ist vorstellbar, ausgehend von unterschiedlichen Startlösungen, etwa einem Satz von Startlösungen, für jede dieser Lösungen das beschriebene Verfahren durchzuführen. Basierend auf den erhaltenen Zielverteilungen kann die beste ausgewählt werden. Dabei können eine oder mehrere Zeitschranken zur Optimierung vorgegeben sein, etwa für die gesamte Bearbeitung und bezüglich jeder Startlösung.

Es kann basierend auf einer Startlösung und/oder einer Zwischenverteilung eine Liste von Ressourcen mit Verbesserungspotential erstellt sein, welche sukzessive innerhalb einer Iteration abgearbeitet werden kann. Diese kann beispielsweise nach einem Ordnungskriterium wie Ressourcenklasse, und/oder Klassengröße, und/oder einem oder mehreren Optimierungsparametern wie aufgrund der Verteilung zugeordneter Profit und/oder Gewichtungssumme und/oder geschätztes Verbesserungspotential geordnet sein.

Es ist vorstellbar, dass die Optimierungsparametrisierung an unterschiedliche Iterationen oder Verteilung angepasst ist, insbesondere hinsichtlich der Bestimmung der Zielverteilung. So können etwa unterschiedliche Parameter und/oder Prioritäten zur Bestimmung der Zielverteilung berücksichtigt werden. Das Ressourcenmanagement kann einen Zeitrahmen betreffen, welcher die Verwendungszeiträume aller betrachteten Anfragen umfasst. Das Verfahren kann rollierend durchgeführt werden, etwa in regelmäßigen Abständen, wobei geänderte Sätze von Anfragen und/oder Ressourcen verwendet werden können, etwa weil Anfragen erfüllt sind, oder erfüllt werden, oder neue Anfrage gestellt wurden, oder Ressourcen nicht verfügbar sind oder neu hinzugekommen sind.

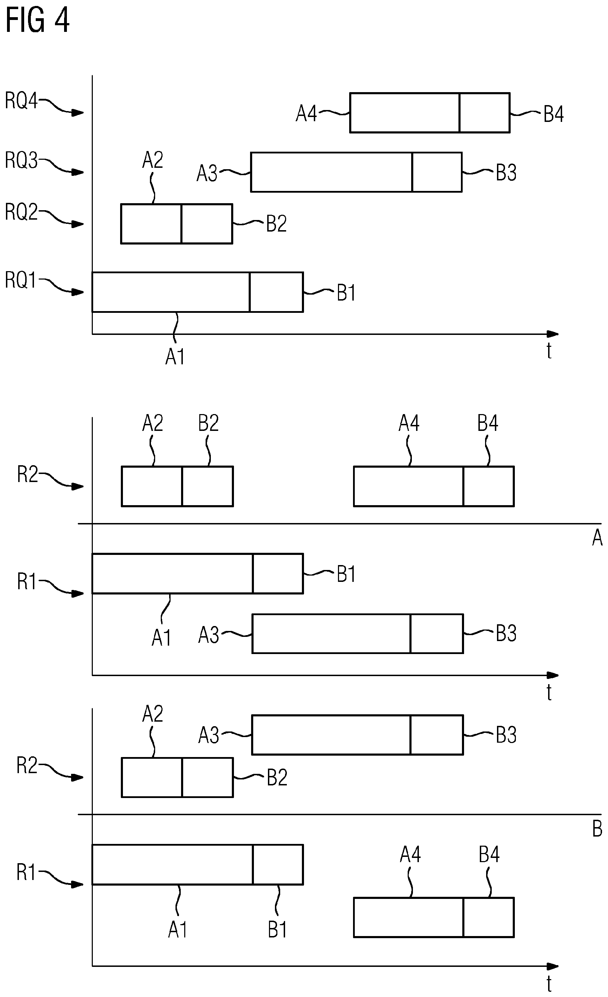

Fig. 4 zeigt einen beispielhaften Ansatz mit Pufferzeiträumen. Die Zeiteinheit t ist willkürlich gewählt. Verwendungsanfragen RQ1...RQ4 sind vorgegeben, die im Beispiel mit zwei Ressourcen R1, R2 erfüllt werden sollen. Jeder Anfrage ist ein Aktivitätszeitraum A1...A4 zugeordnet, etwa basierend auf einer entsprechenden Eingabe. Ein Aktivitätszeitraum kann allgemein die erwartete Dauer der angefragten Aktivität oder Verwendung der Ressource betreffen. Es ist vorgesehen, dass einem Aktivitätszeitraum A1...A4 jeweils ein Pufferzeitraum P1...P4 zugeordnet wird, etwa durch die Bearbeitungseinrichtung und/oder beim Erstellen der Verwendungsanfrage, und/oder vor der Optimierung, etwa beim oder vor dem Erstellen einer Startlösung. Die Pufferzeiträume P1...P4 für unterschiedlichen Anfragen oder Aktivitätszeiträume können unterschiedlich lang sein, etwa basierend auf Dauer des Aktivitätszeitraums und/oder Art der Ressource und/oder Ressourcenklasse und/oder Art der Verwendung und/oder basierend auf der Priorität oder Wichtigkeit des Anfragers/Kunden und/oder bisherigen Verhaltens (historischer Information). Für jede Anfrage RQ1...RQ4 bilden Aktivitätszeitraum und Pufferzeitraum den Verwendungszeitraum. Im Verwendungszeitraum kann der Pufferzeitraum dem Aktivitätszeitraum zeitlich nachfolgen. Es können allerdings auch Varianten vorgesehen sein, in welchen ein Pufferzeitraum dem Aktivitätszeitraum vorausgeht, oder der Pufferzeitraum eine vorausgehende und eine nachfolgende Komponente enthält.

Fig. 4 zeigt in Reihe A eine mögliche Ressourcenverteilung, bei welcher für die Ressource R1 eine Überlappung des Pufferzeitraumes P1 (Anfrage RQ1) mit dem Aktivitätszeitraum A3 auftritt (Anfrage RQ3). Wird diese Verteilung umgesetzt, kann etwa bei verzögerter Rückgabe der Ressource R1 die Anfrage RQ3 nicht oder nicht rechtzeitig erfüllt werden. Reihe B zeigt eine weiter optimierte Verteilung, in welcher für jede Ressource Überlappungen vermieden werden. Ohne die Pufferzeiträume P1....P4 würden Reihe A und B gleichwertige Lösungen angeben, mit Berücksichtigung der Pufferzeiträume ergibt sich eine zusätzliche Verbesserung der Lösungsqualität.

## Patentansprüche

1. Verfahren zum Ressourcenmanagement auf einer Bearbeitungseinrichtung mit einer integrierten Schaltung, umfassend:
Bereitstellen einer Repräsentation eines Satzes (100) von Ressourcen (R1,...,Rn);
Erhalten eines Satzes von Verwendungsanfragen (RQ1,..., RQq), wobei eine Verwendungsanfrage durch Zuteilen einer Ressource (R1, ..., Rn) zu der Verwendungsanfrage (RQ1,..., RQq)erfüllbar ist;
wobei die Ressourcen (R1,...,Rn) in Ressourcenklassen (C1,...,Cm) eingeteilt sind, so dass Ressourcen (R1,...,Rn) einer Ressourcenklasse (C1,...,Cm) bezüglich der Erfüllung einer Verwendungsanfrage (RQ1,..., RQq) austauschbar sind; wobei eine Verwendungsanfrage (RQ1,...,RQq) durch Zuordnung einer Ressource (R1,...,Rn) einer durch die Verwendungsanfrage angefragten Ressourcenklasse (C1,...,Cm) für einen bestimmten, durch die Verwendungsanfrage (RQ1,...,RQq)angefragten Verwendungszeitraum erfüllbar ist; wobei ein Verwendungszeitraum einen Aktivitätszeitraum und einen Pufferzeitraum umfasst, wobei der Pufferzeitraum an den Aktivitätszeitraum anschließt, und wobei der Aktivitätszeitraum einen angefragten Zeitraum zur Verwendung einer Ressource repräsentiert, und der Pufferzeitraum einen zusätzlichen Zeitpuffer repräsentiert;
wobei eine Zielverteilung von Ressourcen zu Verwendungsanfragen basierend auf einer Optimierungsparametrisierung derart bestimmt wird, dass keine zeitlichen Überlappungen der Verwendungszeiträume hinsichtlich der Aktivitätszeiträume der Verwendungsanfragen bestehen, welche einer Ressource zugeordnet sind; wobei gemäß der Zielverteilung physisch jede Ressource zu jedem Zeitpunkt nur einer Verwendungsanfrage zugeordnet ist; wobei die Optimierungsparametrisierung auf Gewichtungen von Zuordnungen von Ressourcen zu Verwendungsanfragen basiert; wobei ferner zum Bestimmen der Zielverteilung eine Startlösung erstellt wird, welche eine Verteilung von Ressourcen (R1,...,Rn) zu Verwendungsanfragen repräsentiert, wobei für jede Verwendungsanfrage (RQ1,..., RQq) eine Zuordnung zu genau einer Ressource (R1,...,Rn) besteht;
wobei die Zielverteilung ausgehend von der Startlösung durch Verschieben einer oder mehrerer Zuordnungen von oder zu mindestens einer Ressource in einer oder mehreren Verschiebungsschritten (B1, B2, B3, B4) basierend auf einer Optimierung bezüglich der Optimierungsparametrisierung bestimmt wird; wobei das Verfahren ferner umfasst: Betreiben der Ressourcen gemäß der Zielverteilung.

2. Verfahren nach Anspruch 1, wobei für die Optimierung zeitliche Überlappung eines Pufferzeitraums mit einem Aktivitätszeitraum anders gewichtet ist als zeitliche Überlappung eines Aktivitätszeitraums mit einem Aktivitätszeitraum.

3. Verfahren nach Anspruch 1 oder 2, wobei für unterschiedliche Ressourcen Pufferzeiträume unterschiedlich gewichtet sind.

4. Verfahren nach einem der vorangehenden Ansprüche, wobei für unterschiedliche Verwendungsanfragen Pufferzeiträume unterschiedlich gewichtet sind.

5. Verfahren nach einem der vorangehenden Ansprüche, wobei die Länge eines Pufferzeitraums auf historischen Informationen und/oder der Ressourcenklasse und/oder einem Anfrager basiert.

6. Verfahren nach einem der vorangehenden Ansprüche, wobei eine Gewichtung einer Zuordnung einer Ressource (R1,...,Rn) zu einer Verwendungsanfrage (RQ1,...,RQq) auf Einnahmen und/oder Profit und/oder Kosten und/oder Länge des Verwendungszeitraums und/oder Länge des Aktivitätszeitraums und/oder Länge des Pufferzeitraums und/oder Lage des Verwendungszeitraums und/oder Klassengröße der Ressourcenklasse (C1,...,Cm) der Ressource (R1,...,Rn) und/oder Priorisierungsinformationen basiert.

7. Verfahren nach einem der vorangehenden Ansprüche, wobei eine Verwendungsanfrage durch Zuordnung einer Ressource (R1,...,Rn) mindestens einer anderen Ressourcenklasse (C1,...,Cm) erfüllbar ist.

8. Verfahren nach einem der vorangehenden Ansprüche, wobei die Ressourcen (R1,...,Rn) Betriebseinrichtungen sind, insbesondere Fahrzeuge, Maschinen oder Produktionsanlagen sind.

9. Verfahren nach einem der vorangehenden Ansprüche, wobei die Zielverteilung derart bestimmt wird, dass zeitliche Überlappungen der Verwendungszeiträume der Verwendungsanfragen (RQ1,...,RQq), welche einer Ressource (R1,...,Rn) zugeordnet sind, minimiert sind, insbesondere derart, dass die Gesamtsumme aller gewichteten Überlappungen zwischen allen derselben Ressource zugeordneten Aktivitäts- und Pufferzeiträumen bei der Ressourcenzuordnung minimiert wird .

10. Bearbeitungseinrichtung mit einer integrierten Schaltung, welche dazu ausgebildet ist, eine Repräsentation eines Satzes (100) von Ressourcen (R1,...,Rn) bereitzustellen;
sowie einen Satz von Verwendungsanfragen (RQ1,..., RQq) zu erhalten, wobei eine Verwendungsanfrage durch Zuteilen einer Ressource (R1,...,Rn) zu der Verwendungsanfrage (RQ1,..., RQq) erfüllbar ist;
wobei die Ressourcen (R1,...,Rn) in Ressourcenklassen (C1,...,Cm) eingeteilt sind, so dass Ressourcen (R1,...,Rn) einer Ressourcenklasse (C1,...,Cm) bezüglich der Erfüllung einer Verwendungsanfrage (RQ1,..., RQq) austauschbar sind;
wobei eine Verwendungsanfrage (RQ1,...,RQq) durch Zuordnung einer Ressource (R1,...,Rn) einer durch die Verwendungsanfrage angefragten Ressourcenklasse (C1,...,Cm) für einen bestimmten, durch die Verwendungsanfrage (RQ1,...,RQq)angefragten Verwendungszeitraum erfüllbar ist; wobei ein Verwendungszeitraum einen Aktivitätszeitraum und einen Pufferzeitraum umfasst, wobei der Pufferzeitraum an den Aktivitätszeitraum anschließt, und wobei der Aktivitätszeitraum einen angefragten Zeitraum zur Verwendung einer Ressource repräsentiert, und der Pufferzeitraum einen zusätzlichen Zeitpuffer repräsentiert;
wobei die Bearbeitungseinrichtung ferner dazu ausgebildet ist, eine Zielverteilung von Ressourcen zu Verwendungsanfragen basierend auf einer Optimierungsparametrisierung derart zu bestimmen, dass keine zeitlichen Überlappungen der Verwendungszeiträume hinsichtlich der Aktivitätszeiträume der Verwendungsanfragen bestehen, welche einer Ressource zugeordnet sind und um die Ressourcen gemäß der Zielverteilung zu betreiben; wobei gemäß der Zielverteilung physisch jede Ressource zu jedem Zeitpunkt nur einer Verwendungsanfrage zugeordnet ist; wobei die Optimierungsparametrisierung auf Gewichtungen von Zuordnungen von Ressourcen zu Verwendungsanfragen basiert; wobei ferner zum Bestimmen der Zielverteilung eine Startlösung erstellt wird, welche eine Verteilung von Ressourcen (R1,...,Rn) zu Verwendungsanfragen repräsentiert, wobei für jede Verwendungsanfrage (RQ1,..., RQq) eine Zuordnung zu genau einer Ressource (R1,...,Rn) besteht;
wobei die Zielverteilung ausgehend von der Startlösung durch Verschieben einer oder mehrerer Zuordnungen von oder zu mindestens einer Ressource in einer oder mehreren Verschiebungsschritten (B1, B2, B3, B4) basierend auf einer Optimierung bezüglich der Optimierungsparametrisierung bestimmt wird.

11. Bearbeitungseinrichtung nach Anspruch 10, wobei für die Optimierung zeitliche Überlappung eines Pufferzeitraums mit einem Aktivitätszeitraum anders gewichtet ist als zeitliche Überlappung eines Aktivitätszeitraums mit einem Aktivitätszeitraum.

12. Bearbeitungseinrichtung nach Anspruch 10 oder 11, wobei für unterschiedliche Ressourcen Pufferzeiträume unterschiedlich gewichtet sind.

## Claims

1. Method for carrying out resource management on a processing device having an integrated circuit, comprising:
providing a representation of a set (100) of resources (R1,...,Rn) ;
receiving a set of usage requests (RQ1,...,RQq), wherein a usage request is able to be fulfilled by allocating a resource (R1,...,Rn) to the usage request (RQ1,...,RQq);
wherein the resources (R1,...,Rn) are divided into resource classes (C1,...,Cm), such that resources (R1,...,Rn) in a resource class (C1,...,Cm) are able to be exchanged with regard to fulfilling a usage request (RQ1,...,RQq); wherein a usage request (RQ1,...,RQq) is able to be fulfilled by assigning a resource (R1,...,Rn) in a resource class (C1,...,Cm) requested by the usage request for a specific usage period requested by the usage request (RQ1,...,RQq); wherein a usage period comprises an activity period and a buffer period, wherein the buffer period adjoins the activity period, and wherein the activity period represents a requested period for the usage of a resource, and the buffer period represents an additional time buffer;
wherein a target distribution of resources to usage requests is determined based on an optimization parameterization in such a way that there are no temporal overlaps between the usage periods and the activity periods of the usage requests assigned to a resource; wherein, according to the target distribution, each resource is physically assigned to only one usage request at any time; wherein the optimization parameterization is based on weightings of assignments of resources to usage requests;
wherein, to determine the target distribution, a starting solution is also created, representing a distribution of resources (R1,...,Rn) to usage requests, wherein an assignment to exactly one resource (R1,...,Rn) exists for each usage request (RQ1,...,RQq) ;
wherein the target distribution is determined from the starting solution by moving one or more assignments from or to at least one resource in one or more movement steps (B1, B2, B3, B4) based on an optimization with regard to the optimization parameterization; wherein the method furthermore comprises: operating the resources according to the target distribution.

2. Method according to Claim 1, wherein, for the optimization, a temporal overlap between a buffer period and an activity period is weighted differently than a temporal overlap between an activity period and an activity period.

3. Method according to Claim 1 or 2, wherein buffer periods are weighted differently for different resources.

4. Method according to one of the preceding claims, wherein buffer periods are weighted differently for different usage requests.

5. Method according to one of the preceding claims, wherein the length of a buffer period is based on historical information and/or the resource class and/or a requestor.

6. Method according to one of the preceding claims, wherein a weighting of an assignment of a resource (R1,...,Rn) to a usage request (RQ1,...,RQq) is based on revenue and/or profit and/or costs and/or length of the usage period and/or length of the activity period and/or length of the buffer period and/or location of the usage period and/or class size of the resource class (C1,...,Cm) of the resource (R1,...,Rn) and/or prioritization information.

7. Method according to one of the preceding claims, wherein a usage request is able to be fulfilled by assigning a resource (R1,...,Rn) in at least one other resource class (C1,...,Cm).

8. Method according to one of the preceding claims, wherein the resources (R1,...,Rn) are operating devices, in particular vehicles, machines or production installations.

9. Method according to one of the preceding claims, wherein the target distribution is determined in such a way that temporal overlaps between the usage periods of the usage requests (RQ1,...,RQq) assigned to a resource (R1,...,Rn) are minimized, in particular in such a way that the total sum of all weighted overlaps between all activity and buffer periods assigned to the same resource is minimized in the resource assignment.

10. Processing device having an integrated circuit that is designed to provide a representation of a set (100) of resources (R1,...,Rn);
and to receive a set of usage requests (RQ1,...,RQq), wherein a usage request is able to be fulfilled by allocating a resource (R1,...,Rn) to the usage request (RQ1,...,RQq);
wherein the resources (R1,...,Rn) are divided into resource classes (C1,...,Cm), such that resources (R1,...,Rn) in a resource class (C1,...,Cm) are able to be exchanged with regard to fulfilling a usage request (RQ1,...,RQq);
wherein a usage request (RQ1,...,RQq) is able to be fulfilled by assigning a resource (R1,...,Rn) in a resource class (C1,...,Cm) requested by the usage request for a specific usage period requested by the usage request (RQ1,...,RQq); wherein a usage period comprises an activity period and a buffer period, wherein the buffer period adjoins the activity period, and wherein the activity period represents a requested period for the usage of a resource, and the buffer period represents an additional time buffer;
wherein the processing device is furthermore designed to determine a target distribution of resources to usage requests based on an optimization parameterization in such a way that there are no temporal overlaps between the usage periods and the activity periods of the usage requests assigned to a resource and to operate the resources according to the target distribution; wherein, according to the target distribution, each resource is physically assigned to only one usage request at any time; wherein the optimization parameterization is based on weightings of assignments of resources to usage requests;
wherein, to determine the target distribution, a starting solution is also created, representing a distribution of resources (R1,...,Rn) to usage requests, wherein an assignment to exactly one resource (R1,...,Rn) exists for each usage request (RQ1,...,RQq);
wherein the target distribution is determined from the starting solution by moving one or more assignments from or to at least one resource in one or more movement steps (B1, B2, B3, B4) based on an optimization with regard to the optimization parameterization.

11. Processing device according to Claim 10, wherein, for the optimization, a temporal overlap between a buffer period and an activity period is weighted differently than a temporal overlap between an activity period and an activity period.

12. Processing device according to Claim 10 or 11, wherein buffer periods are weighted differently for different resources.

## Revendications

1. Procédé pour la gestion de ressources sur un dispositif de traitement avec un circuit intégré, comportant :
la fourniture d'une représentation d'un ensemble (100) de ressources (R1, ..., Rn) ;
l'obtention d'un ensemble de requêtes d'utilisation (RQ1, ..., RQq), dans lequel une requête d'utilisation peut être satisfaite par l'attribution d'une ressource (R1, ..., Rn) à la requête d'utilisation (RQ1, ..., RQq) ;
dans lequel les ressources (R1, ..., Rn) sont réparties en classes de ressources (C1, ..., Cm) de sorte que des ressources (R1, ..., Rn) d'une classe de ressources (C1, ..., Cm) soient interchangeables en ce qui concerne la satisfaction d'une requête d'utilisation (RQ1, ..., RQq) ; dans lequel une requête d'utilisation (RQ1, ..., RQq) peut être satisfaite par l'association à une ressource (R1, ..., Rn) d'une classe de ressources (C1, ..., Cm) requise par la requête d'utilisation pour une période d'utilisation requise par la requête d'utilisation (RQ1, ..., RQq) déterminée ; dans lequel une période d'utilisation comporte une période d'activité et une période tampon, dans lequel la période tampon est dans le prolongement de la période d'activité, et dans lequel la période d'activité représente une période requise pour l'utilisation d'une ressource, et la période tampon représente un tampon temporel supplémentaire ;
dans lequel une distribution cible de ressources à des requêtes d'utilisation est déterminée sur la base d'une paramétrisation d'optimisation de telle sorte que les périodes d'activité des requêtes d'utilisation qui sont associées à une ressource ne présentent aucun chevauchement temporel des périodes d'utilisation ; dans lequel chaque ressource est associée physiquement à chaque instant à une unique requête d'utilisation selon la distribution cible ; dans lequel la paramétrisation d'optimisation se base sur des pondérations d'associations de ressources à des requêtes d'utilisation ; dans lequel, en outre, pour la détermination de la distribution cible, une solution de départ est établie, laquelle représente une distribution de ressources (R1, ..., Rn) à des requêtes d'utilisation, dans lequel, pour chaque requête d'utilisation (RQ1, ..., RQq), il existe une association à exactement une ressource (R1, ..., Rn) ;
dans lequel la distribution cible est déterminée à partir de la solution de départ par le décalage d'une ou de plusieurs associations d'au moins ou à au moins une ressource en une ou plusieurs étapes de décalage (B1, B2, B3, B4) sur la base d'une optimisation en ce qui concerne la paramétrisation d'optimisation ; le procédé comportant en outre : l'exploitation des ressources selon la distribution cible.

2. Procédé selon la revendication 1, dans lequel, pour l'optimisation, le chevauchement temporel d'une période tampon avec une période d'activité est pondéré d'une autre manière que le chevauchement temporel d'une période d'activité avec une période d'activité.

3. Procédé selon la revendication 1 ou la revendication 2, dans lequel, pour des ressources différentes, des périodes tampon sont pondérées différemment.

4. Procédé selon l'une des revendications précédentes, dans lequel, pour des requêtes d'utilisation différentes, des périodes tampon sont pondérées différemment.

5. Procédé selon l'une des revendications précédentes, dans lequel la longueur d'une période tampon se base sur des informations historiques et/ou la classe de ressources et/ou un demandeur.

6. Procédé selon l'une des revendications précédentes, dans lequel une pondération d'une association d'une ressource (R1, ..., Rn) à une requête d'utilisation (RQ1, ..., RQq) se base sur des recettes et/ou un profit et/ou des coûts et/ou la longueur de la période d'utilisation et/ou la longueur de la période d'activité et/ou la longueur de la période tampon et/ou l'emplacement de la période d'utilisation et/ou la taille de classe de la classe de ressources (C1, ..., Cm) de la ressource (R1, ..., Rn) et/ou des informations de priorisation.

7. Procédé selon l'une des revendications précédentes, dans lequel une requête d'utilisation peut être satisfaite par l'association à une ressource (R1, ..., Rn) d'au moins une autre classe de ressources (C1, ..., Cm).

8. Procédé selon l'une des revendications précédentes, dans lequel les ressources (R1, ..., Rn) sont des dispositifs fonctionnels, en particulier des véhicules, des machines ou des installations de production.

9. Procédé selon l'une des revendications précédentes, dans lequel la distribution cible est déterminée de telle sorte que les chevauchements temporels des périodes d'utilisation des requêtes d'utilisation (RQ1, ..., RQq) qui sont associées à une ressource (R1, ..., Rn) soient minimisés, en particulier de telle sorte que la somme totale de tous les chevauchements pondérés entre toutes les périodes d'activité et tampon associées à la même ressource soit minimisée lors de l'association de ressources.

10. Dispositif de traitement avec un circuit intégré, lequel est conçu pour fournir une représentation d'un ensemble (100) de ressources (R1, ..., Rn) ;
ainsi que pour obtenir un ensemble de requêtes d'utilisation (RQ1, ..., RQq), dans lequel une requête d'utilisation peut être satisfaite par l'attribution d'une ressource (R1, ..., Rn) à la requête d'utilisation (RQ1, ..., RQq) ;
dans lequel les ressources (R1, ..., Rn) sont réparties en classes de ressources (C1, ..., Cm) de sorte que des ressources (R1, ..., Rn) d'une classe de ressources (C1, ..., Cm) soient interchangeables en ce qui concerne la satisfaction d'une requête d'utilisation (RQ1, ..., RQq) ; dans lequel une requête d'utilisation (RQ1, ..., RQq) peut être satisfaite par l'association à une ressource (R1, ..., Rn) d'une classe de ressources (C1, ..., Cm) requise par la requête d'utilisation pour une période d'utilisation requise par la requête d'utilisation (RQ1, ..., RQq) déterminée ; dans lequel une période d'utilisation comporte une période d'activité et une période tampon, dans lequel la période tampon est dans le prolongement de la période d'activité, et dans lequel la période d'activité représente une période requise pour l'utilisation d'une ressource, et la période tampon représente un tampon temporel supplémentaire ;
le dispositif de traitement étant en outre conçu pour déterminer une distribution cible de ressources à des requêtes d'utilisation sur la base d'une paramétrisation d'optimisation de telle sorte que les périodes d'activité des requêtes d'utilisation qui sont associées à une ressource ne présentent aucun chevauchement temporel des périodes d'utilisation, et pour exploiter les ressources selon la distribution cible ; dans lequel chaque ressource est associée physiquement à chaque instant à une unique requête d'utilisation selon la distribution cible ; dans lequel la paramétrisation d'optimisation se base sur des pondérations d'associations de ressources à des requêtes d'utilisation ; dans lequel, en outre, pour la détermination de la distribution cible, une solution de départ est établie, laquelle représente une distribution de ressources (R1, ..., Rn) à des requêtes d'utilisation, dans lequel, pour chaque requête d'utilisation (RQ1, ..., RQq), il existe une association à exactement une ressource (R1, ..., Rn) ;
dans lequel la distribution cible est déterminée à partir de la solution de départ par le décalage d'une ou de plusieurs associations d'au moins ou à au moins une ressource en une ou plusieurs étapes de décalage (B1, B2, B3, B4) sur la base d'une optimisation en ce qui concerne la paramétrisation d'optimisation.

11. Dispositif de traitement selon la revendication 10, dans lequel, pour l'optimisation, le chevauchement temporel d'une période tampon avec une période d'activité est pondéré d'une autre manière que le chevauchement temporel d'une période d'activité avec une période d'activité.

12. Dispositif de traitement selon la revendication 10 ou la revendication 11, dans lequel, pour des ressources différentes, des périodes tampon sont pondérées différemment.
